# DEMANDE DE BREVET EUROPEEN

(11) **EP 2 827 293 A1**
(43) Date de publication de la demande: **21.01.2015**
(21) Numéro de dépôt: 14176767.3
(22) Date de dépôt: 11.07.2014
(51) Int. Cl.: G06Q 30/02

(54) **Procédé de collecte de données relatives à la distribution d'un produit**

(30) Priorité: 15.07.2013 FR 1356957
(71) Demandeur: Orange, 75015 Paris (FR)
(72) Inventeur: De Cordes, Nicolas, 1180 Bruxelles (BE)
(74) Mandataire: Regimbeau

(57) **Abrégé**

La présente invention concerne un procédé de collecte de données relatives à la distribution d'un produit (4), comprenant la mise en oeuvre par un module de traitement de données (21) d'un serveur (2) d'étapes de :
(a) Réception via un réseau de communication (3) d'au moins un message émis par un terminal mobile (1a, 1b), le message contenant un code comprenant un identifiant dudit produit (4) ;
(b) Détermination d'un ensemble de données descriptives du message comprenant au moins :
o des données temporelles relatives au moment d'émission du message par le terminal mobile (1a, 1b) ;
o des données de localisation relatives au lieu d'émission du message par le terminal mobile (1a, 1b) ;

(c) Suppression dans ledit ensemble de données descriptives des données permettant l'identification du terminal mobile (1a, 1b) de sorte à les anonymiser ;
(d) Association dans une base de données structurées stockée dans un module de stockage de données (22) du serveur (2) de l'identifiant du produit (4) avec les données descriptives du message anonymisées.

## Description

### DOMAINE TECHNIQUE GENERAL

La présente invention concerne un procédé de collecte de données relatives à la distribution d'un produit.

### ETAT DE L'ART

Toute société qui commercialise un produit cherche à collecter de l'information sur les usages réels de ce produit, en vue de traitements statistiques : quand et où les produits sont-ils acquis et utilisés ? Par qui ? etc. On appelle ceci le géomarketing.

La compréhension poussée des utilisateurs permet en effet d'adapter aux mieux les produits et les services au marché.

Pour cela, sont généralement mises en oeuvre des enquêtes auprès des consommateurs, qui s'avèrent lentes, coûteuses, et souvent basées sur des déclarations invérifiables des clients plus que sur de l'observation factuelle.

Il s'agit par exemple de questionnaires que les clients sont invités à remplir (en échange quelque fois d'un cadeau), dans lesquels ils répondent à quelques questions. On trouve aujourd'hui des questionnaires électroniques qui peuvent être renseignés en ligne, ce qui permet un traitement automatisé.

Toutefois, que les questionnaires soient papier ou électroniques, on constate que informations obtenues dans ces questionnaires sont parfois (volontairement ou non) inexactes ou incomplètes, sans moyen de vérification, ce qui fausse les études.

De plus, ces enquêtes se heurtent à la nécessité de préserver l'anonymat des consommateurs, ce qui complexifie la collecte des données.

Il serait ainsi souhaitable de disposer d'un procédé innovant de collecte de données relatives à un produit, qui soit fiable, automatisé (et donc contraignant ni pour les consommateurs ni la société commercialisant le produit), exhaustif, tout en préservant l'anonymat des consommateurs.

### PRESENTATION DE L'INVENTION

La présente invention se rapporte ainsi à un procédé de collecte de données relatives à la distribution d'un produit, comprenant la mise en oeuvre par un module de traitement de données d'un serveur d'étapes de :
(a) Réception via un réseau de communication d'au moins un message émis par un terminal mobile, le message contenant un code comprenant un identifiant dudit produit ;
(b) Détermination d'un ensemble de données descriptives du message comprenant au moins:
   ∘ des données temporelles relatives au moment d'émission du message par le terminal mobile ;
   ∘ des données de localisation relatives au lieu d'émission du message par le terminal mobile ;
(c) Suppression dans ledit ensemble de données descriptives des données permettant l'identification du terminal mobile de sorte à les anonymiser ;
(d) Association dans une base de données structurées stockée dans un module de stockage de données du serveur de l'identifiant du produit avec les données descriptives du message anonymisées.

Le présent procédé permet ainsi l'association automatique et façon anonyme de données caractérisant un produit, avec l'heure et le lieu de son utilisation. Cette collecte est automatique et fiable, puisqu'elle n'est plus basée sur des renseignements saisis par un consommateur, mais sur des paramètres d'un réseau de communication mobiles.

Dans la mesure où les données « descriptives » du produit sont purgées de toute information qui serait susceptible de permettre l'identification du consommateur, sa vie privée est préservée.

Selon d'autres caractéristiques avantageuses et non limitatives :
- lesdites données descriptives du message sont des métadonnées extraites du message. Ainsi, le message seul suffit à fournir l'ensemble des données utiles à collecter, le recours à aucun serveur tiers n'est requis ;
- les données de localisation relatives au lieu d'émission du message par le terminal mobile sont un identifiant d'une station de base via laquelle le terminal mobile est connecté au réseau de communication.
   Dans la mesure où les positions géographiques des cellules sont parfaitement déterminées, il s'agit d'un critère facilement disponible et précis pour localiser les produits ;
- la suppression des données permettant l'identification du terminal mobile à l'étape (c) consiste en leur remplacement par des données factices dans ladite base de données structurées.
   Ce remplacement permet l'anonymisation de façon transparente : la structure des données n'est pas modifiée ;
- le code comprenant un identifiant dudit produit et un identifiant unique est marqué sur le produit, ce code étant saisi ou scanné par un utilisateur du terminal mobile de sorte à être inséré dans le message reçu à l'étape (a).
   Le marquage du produit permet de garantir que les données temporelles et de localisation collectée sont particulièrement conformes à la réalité ;
- ledit code contenu dans le message comprend également un identifiant unique, cet identifiant unique étant supprimé du code à l'étape (c) de sorte à également l'anonymiser.
   En supprimant y compris des données « non uniques » du code, on garantit encore davantage l'absence d'atteinte à la vie privée des consommateurs ;
- l'identifiant unique est comparé avant sa suppression avec une liste d'identifiants uniques remarquables, le procédé comprenant alors si l'identifiant unique est trouvé dans ladite liste une étape (d') d'enregistrement dans une base de données structurées auxiliaire également stockée dans le module de stockage du serveur des données permettant l'identification du terminal mobile. La collecte de données peut être couplée avec un événement de type jeu concours pour inciter les consommateurs à transmettre des données. La partie identifiant unique du code envoyé permet simultanément à l'association des données à valeur statistique, l'identification d'un éventuel gagnant que l'on pourra contacter grâce à ses données d'identification personnelle avant qu'elles soient supprimées. Le procédé est en cela particulièrement efficace et performant ;
- les données permettant l'identification du terminal mobile consistent en un numéro de téléphone du terminal mobile.
   Il s'agit de données que l'on peut tirer facilement du message reçu, et qui permettent très aisément de contacter le consommateur (par retour de message) s'il a gagné ;
- le procédé comprend une étape (e) de traitement de l'identifiant du produit et/ou des données de localisation relatives au lieu d'émission du message par le terminal mobile de sorte à enrichir les données structurées.
   Cela permet de disposer directement de données facilement exploitables et très pertinentes à des fins statistiques.

Selon un deuxième aspect, l'invention concerne un serveur de collecte de données relatives à la distribution d'un produit, comprenant un module de stockage de données et un module de traitement de données configuré pour mettre en oeuvre :
- un module de réception via un réseau de communication d'au moins un message émis par un terminal mobile, le message contenant un code comprenant un identifiant dudit produit ;
- un module de détermination d'un ensemble de données descriptives du message comprenant au moins :
   o des données temporelles relatives au moment d'émission du message par le terminal mobile ;
   o des données de localisation relatives au lieu d'émission du message par le terminal mobile ;
- un module de suppression dans ledit ensemble de données descriptives des données permettant l'identification du terminal mobile de sorte à les anonymiser ;
- un module d'association dans une base de données structurées stockée dans le module de stockage de données de l'identifiant du produit avec les données descriptives du message anonymisées.

Ce serveur est l'équipement optimal pour mettre en oeuvre le présent procédé, dans la mesure où il est particulièrement intégré au réseau opérateur, et dispose de toutes les informations permettant efficacement et avec fiabilité de structurer les données intéressantes pour l'étude de la distribution du produit.

Selon un troisième et un quatrième aspect, l'invention concerne un produit programme d'ordinateur comprenant des instructions de code pour l'exécution d'un procédé selon le premier aspect de l'invention de collecte de données relatives à la distribution d'un produit ; et un moyen de stockage lisible par un équipement informatique sur lequel un produit programme d'ordinateur comprend des instructions de code pour l'exécution d'un procédé selon le premier aspect de l'invention de collecte de données relatives à la distribution d'un produit.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 représente une architecture pour la mise en oeuvre du procédé selon l'invention ;
- la figure 2 représente un exemple de code utilisé par le procédé selon l'invention ;
- les figures 3a-3b comparent deux exemples de données obtenues pendant la mise en oeuvre du procédé selon l'invention, avant et après anonymisation.

### DESCRIPTION DETAILLEE

### Architecture interne

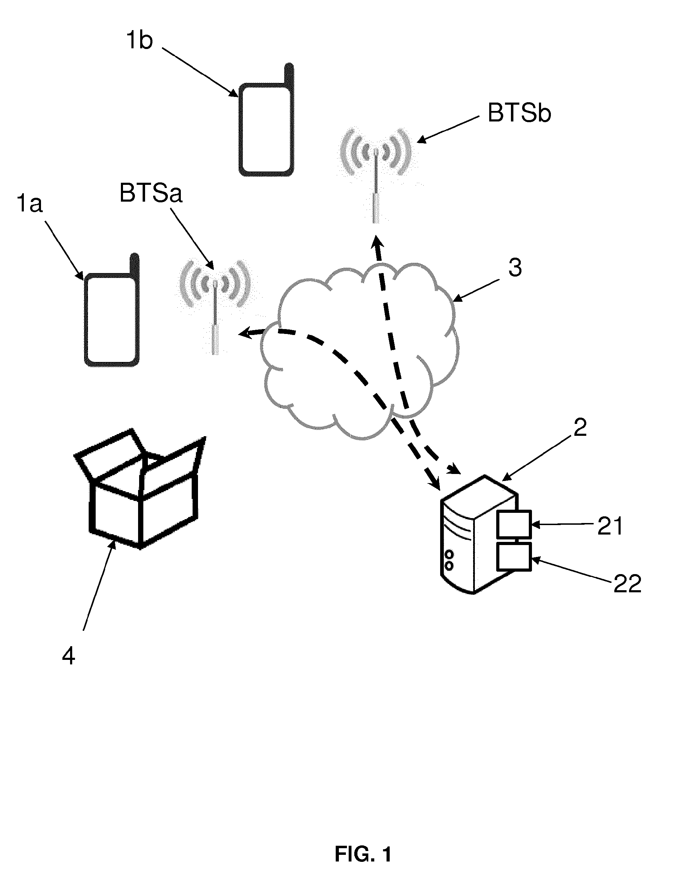

Le présent procédé de collecte de données est mis en oeuvre dans un environnement du type de celui représenté par la **figure 1**.

Un ou plusieurs terminaux mobiles 1a, 1b sont connectés à un réseau de communication 3 (en particulier un réseau de téléphonie mobile) via une ou plusieurs stations de base BTSa, BTSb (« Base Transceiver Station ») ou ses équivalents Node B, eNode B, etc., dans les réseaux de générations récentes.

Chaque station de base comprend une antenne permettant la communication sans fil au sein d'une cellule.

Chaque terminal mobile 1a, 1 b peut être n'importe quel équipement apte à se connecter au réseau de communication 3. Il peut par exemple d'agir d'un smartphone, d'une tablette tactile, etc.

Le terminal mobile 1a, 1b comprend un module de traitement de données capable de gérer l'envoi d'un message de type SMS (« Short Message Service ») ou équivalent (par exemple MMS - « Multimedia Messaging Service »).

Ce module de traitement de données capable de gérer l'envoi de message peut être le module par défaut d'envoi de messages généralement compris dans les systèmes d'exploitation des terminaux mobiles de type smartphone. Ce module de traitement de données peut aussi être compris dans une application tierce. Cette application peut avoir été pré-installée sur le terminal mobile 1a, 1b par l'opérateur ou le vendeur du terminal mobile 1a, 1b. L'application peut aussi être installée par l'utilisateur du terminal mobile 1a, 1b. L'installation peut se faire par l'utilisateur en téléchargeant l'application par exemple via Google Play^{™} ou Itunes^{™}. L'utilisateur peut aussi déclencher l'installation de l'application en capturant par exemple un flashcode avec son terminal mobile 1a, 1b.

L'application comprend un module de traitement de données capable d'émettre des messages, mais peut aussi comprendre des modules permettant de scanner des tags de type codes-barres à une ou plusieurs dimensions, QR code (code-barres à deux dimension - Quick Response code), flashcode^{™}, Datamatrix ou autre tags. L'envoi de messages peut se faire par messages courts, de type SMS, par messages multimédia, de type MMS, ou par tout type de message. Les messages peuvent être émis par tout protocole ou service, par exemple USSD (« Unstructured Supplementary Service Data »), IP (« Internet Protocol »), ou même encapsulés dans un canal voix.

L'application peut être en communication avec un serveur applicatif dédié, sur un modèle de fonctionnement client-serveur. Selon les modes de réalisations, l'application peut envoyer en parallèle les mêmes données à plusieurs serveurs applicatifs, ou proposer le choix à l'utilisateur du serveur applicatif à utiliser.

Les données collectées sont relatives à la distribution d'un produit 4, qui peut être n'importe quelle marchandise commercialisée à moyenne ou grande échelle (en particulier à l'échelle du réseau de communication 3) pour laquelle on cherche à collecter de l'information sur les usages réels. Tout type de produit 4 est possible. Dans la suite de la présente description on prendra l'exemple de boissons, mais d'autres produits 4 tels que les produits ménagers, les produits alimentaires, l'électroménagers, etc., sont demandeurs de collecte de données statistiques.

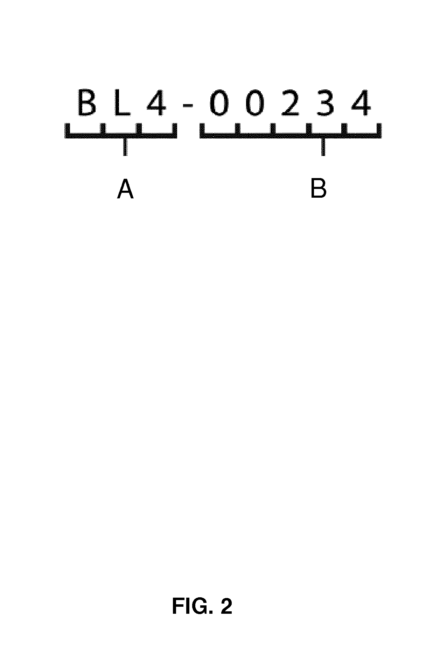

Ce produit 4 est marqué d'un code, par exemple du type de celui représenté par la figure 2. Dans cet exemple, il s'agit d'un code alphanumérique lisible par le consommateur. Alternativement, il peut être sous la forme d'un code barre, un tag NFC (« Near field communication »), ou tout autre moyen permettant de disposer physiquement des données sur le produit 4. Ainsi, le message peut être constitué par une application installée sur le terminal mobile 1a, 1b suite à la lecture par cette même application d'un code barre, d'un QR code ou d'un tag NFC.

Ce code comprend au moins un identifiant du produit 4. Il s'agit de la partie A visible sur la figure 2. Cet identifiant du produit 4 est différent entre deux modèles de produits, mais identique par exemple entre tous les produits d'un lot. Il ne doit pas permettre d'identifier de façon unique le produit 4 en particulier, contrairement à un identifiant unique (partie B du code de la figure 2), dont l'utilité sera décrite plus loin.

Dans l'exemple de la figure 2, l'identifiant de produit 4 se lit « BL4 », et signifie « Produit en format [B]outeille, concentration en sucre [L]égère, fournisseur numéro [4] ». L'homme du métier saura choisir les données adéquates à placer dans le code du produit 4.

Le code est préférentiellement disposé sur le produit de telle sorte qu'il soit impératif d'acheter (voire d'utiliser) le produit 4 pour y accéder. Par exemple, dans le cas d'une boisson en bouteille, le code peut être disposé sous le bouchon, de sorte à ce qu'il devienne accessible lorsque le consommateur décide de boire la boisson. Si le produit est emballé dans un carton, le code peut être imprimé sur sa face interne, de sorte à être accessible à l'ouverture.

L'architecture représentée à la figure 1 représente également un serveur 2 connecté au réseau de communication 3. Il s'agit d'un serveur de l'opérateur du réseau 3, et il comprend classiquement un module de traitement de données 21 (un processeur) et un module de stockage de données 22 (par exemple un disque dur).

### Message

Dans une première étape (a), un message (comme expliqué précédemment, typiquement un SMS) contenant le code comprenant l'identifiant du produit 4 est transmis du terminal mobile 1a, 1 b du consommateur du produit 4 au serveur 2 via le réseau de communication 3.

Il peut s'agir soit d'un message dans lequel le consommateur a saisi manuellement le code lu sur le produit 4. Alternativement, si le code est sous la forme d'un code barre, le consommateur peut utiliser une application qui permet de scanner le code barre et composer le SMS. Le numéro auquel envoyer ce message peut être également marqué sur le produit 4, ou affiché publiquement.

Les messages émis d'une pluralité de terminaux mobiles 1a, 1b sont collectés par le serveur 2.

Dans une deuxième étape (b), le module de traitement de données 21 du serveur 2 détermine un ensemble de données descriptives du message comprenant au moins :
∘ des données temporelles relatives au moment d'émission du message par le terminal mobile 1a, 1b ;
∘ des données de localisation relatives au lieu d'émission du message par le terminal mobile 1a, 1b.

Dans la mesure où le serveur 2 est un serveur de l'opérateur du réseau 3, l'obtention de ces données descriptives peut être réalisée de nombreuses manières. Par exemple, chaque envoi d'un message peut générer un Compte-Rendu d'Appel (CRA) au niveau du serveur 2 ou d'un autre serveur de l'opérateur. En outre, le message peut être associé à des métadonnées (par exemple disposées dans des en-têtes) qui sont extraites.

De façon générale, les données descriptives « brutes » obtenues par le serveur 2 comprennent :
∘ un identifiant du terminal mobile 1a, 1b (typiquement son numéro de téléphone) ;
∘ les heures d'émission/réception ;
∘ un identifiant de la station de base BTSa, BTSb via laquelle le terminal mobile 1a, 1b est connecté au réseau de communication 3.

On constate que les deuxième et troisième points correspondent respectivement aux données temporelles et de localisation que le module de traitement de données 21 cherche à déterminer.

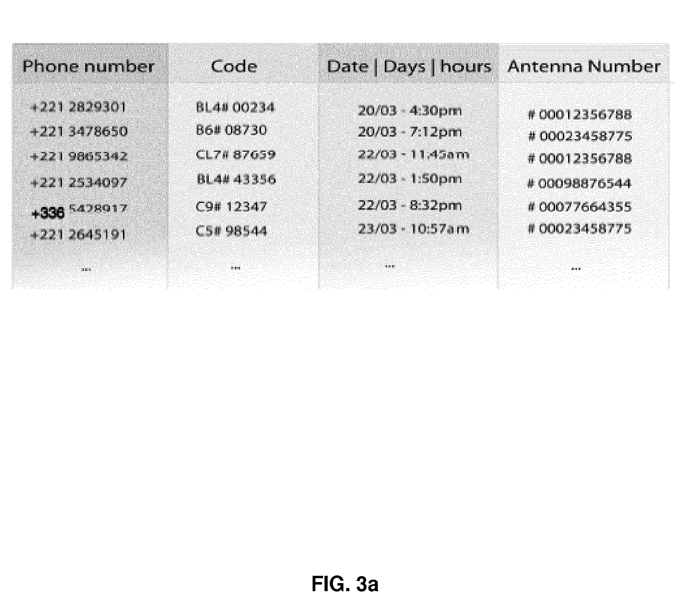

A ce niveau, chaque message est associé à un quadruplet de données tel que représenté par la **figure 3a**.

On comprendra toutefois que le présent procédé n'est en rien limité à l'utilisation d'un identifiant de la station de base BTSa, BTSb pour obtenir des données de localisation, et qu'on pourra par exemple utiliser un identifiant de borne Wi-Fi, le calcul de coordonnées GPS, de la reconnaissance d'image à partir d'une photographie prise sur le terminal mobile 1a, 1b, ou encore un check-in (le partage de la position du consommateur, par exemple sur un réseau social).

### Anonymisation

Les données obtenues à ce point ne sont pas exploitables puisqu'elles contiennent des informations personnelles. Pour avoir leur faire subir des traitements statistiques, il est ainsi nécessaire de les anonymiser (en d'autres termes les rendre anonymes).

Pour cela, est mise en oeuvre une étape (c) de suppression dans ledit ensemble de données descriptives des données permettant l'identification du terminal mobile 1a, 1b. Si le code contenu dans le message comprend également un identifiant unique (partie B visible sur la figure 2), cet identifiant unique est également supprimé du code à l'étape (c), puisque il s'agit indirectement de données permettant d'identifier le terminal mobile 1a, 1b et son utilisateur.

### Stockage structuré et prétraitement

Dans une étape (d), sont associées dans une base de données structurées stockée dans le module de stockage 22 du serveur 2 de l'identifiant du produit 4 avec les données descriptives du message, en l'espèce les données anonymisées.

Comme expliqué avant, on comprendra que la structuration des données peut commencer avant l'anonymisation, en d'autres termes que les étapes (c) et (d) peuvent être inversées. Dans ce cas, la suppression des données permettant l'identification du terminal mobile 1a, 1 b peut consister en leur remplacement par des données factices dans ladite base de données structurées.

De façon générale, on obtient à l'issue des étapes (c) et (d) la base de données structurée dans laquelle les seules données conservées sont les données relatives à l'identifiant du produit 4, les données temporelles, et les données de localisation.

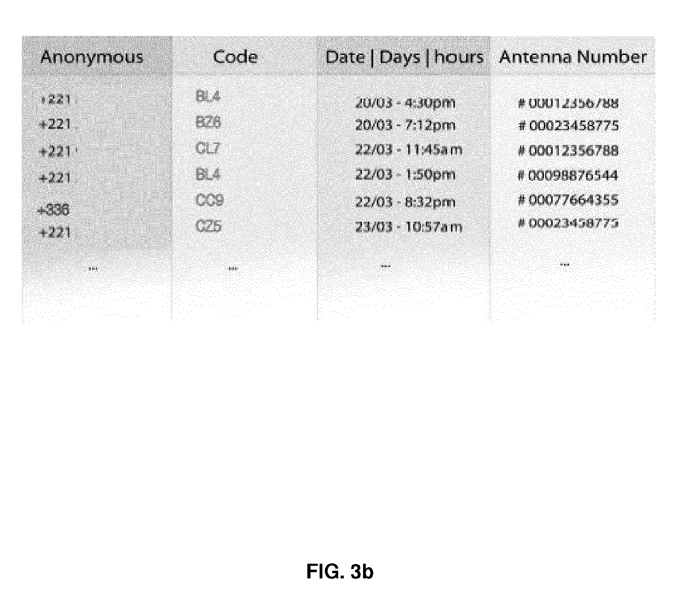

Comme l'on voit sur la **figure 3b**, la partie B identifiant unique du code a été effacée, et seul l'indicatif national a été conservé dans les numéros de téléphone.

Les données structurées ainsi obtenues préservent la vie privée des consommateurs, et peuvent ainsi être restituées et transmises (par exemple à la société commercialisant le produit) en tant que données statistiques relatives à un produit 4, en vue de traitements statistiques. La société peut par exemple disposer d'un poste client via lequel elle se connecte au serveur 2 pour consulter les données anonymisées collectées.

Le procédé peut comprendre une ou plusieurs étapes optionnelles (e) de prétraitement et d'enrichissement des données de la base de données structurées, visant à améliorer la lisibilité. Par exemple, les données de l'identifiant produit 4 du code peuvent être traitées de sorte à en déduire le type de produit, et permettre une classification supplémentaires.

Les données de localisation, qui sont en l'état sous la forme d'un identifiant de station de base BTSa, BTSb, peuvent être traitées de sorte à associer à chaque identifiant de station de base ses coordonnées GPS. Les données structurées peuvent alors être rendues par le module de traitement de données 21 sous forme graphique, par exemple en pointant les codes reçus sur une carte géographique.

Dans un mode de réalisation particulier qui va être à présent décrit, les données peuvent en outre être associées à des « événements ».

### Evénements

La collecte des données repose toujours sur du volontariat. Le consommateur doit en effet envoyer de lui-même le message qui déclenche l'étape (a).

Pour cela, il peut être mis en oeuvre un mécanisme d'incitation basé sur des événements tels que des jeux concours : l'envoi d'un message contenant un code trouvé sur un produit peut conduire le consommateur à gagner un prix. Envoyer le message correspond donc à une participation à l'événement.

Selon un mode de réalisation préféré, le présent procédé permet astucieusement de gérer simultanément la collecte des données statistiques et la mise en oeuvre de l'événement.

Pour cela, l'identifiant unique compris dans un code (la partie B visible sur la figure 2) est utilisé comme numéro de participant. Dans la mesure où chaque identifiant unique ne peut être envoyé qu'une seule fois, il est comparé avant sa suppression avec une liste d'identifiants uniques remarquables (qui sont des identifiants gagnants, en d'autres termes associés à un lot).

Le procédé comprend alors si l'identifiant unique est trouvé dans ladite liste une étape (d') d'enregistrement (réalisée en parallèle des étapes (c) et (d)) dans une base de données structurées auxiliaire également stockée dans le module de stockage 22 du serveur 2 des données permettant l'identification du terminal mobile 1a, 1b.

En d'autres termes, on associe les données qui vont être ensuite supprimées. En effet, il est nécessaire de contacter les consommateurs qui ont gagné, par exemple par retour de message en utilisant le numéro de téléphone identifié. C'est pour cette raison qu'il est intéressant d'obtenir permettant l'identification du terminal mobile 1a, 1b avant de les supprimer, au lieu d'extraire seulement les informations déjà anonymes.

Dans la première base de données (celle qui contient les données anonymisées pour usage statistique), il est alors intéressant d'intégrer des données relatives à l'évènement de sorte à pouvoir lier chaque collecte de données à l'événement qui l'a provoquée, afin d'évaluer son efficacité commerciale

### Echange de messages

Un enrichissement supplémentaire peut être mis en oeuvre préalablement à l'anonymisation de l'étape (c). Cet enrichissement supplémentaire peut consister en l'envoi à destination du terminal mobile 1a, 1b (ce qui est possible, puisque à ce stade on dispose encore de données permettant d'identifier le terminal mobile 1a, 1b), par lequel on pose une ou plusieurs questions supplémentaires au consommateur (par exemple son âge). Si le consommateur répond via un deuxième message, le contenu de ce dernier est traité de sorte à être intégré dans les données structurées comme un ou plusieurs champs supplémentaires.

Si certaines données permettant d'identifier le terminal mobile 1a, 1b étaient ajoutées par erreur à ce niveau (par exemple si le consommateur laisse son nom dans le message), ces données seront-elles aussi supprimées lors de l'anonymisation.

### Serveur

L'invention concerne également le serveur 2 pour la mise en oeuvre du procédé précédemment décrit.

Ce serveur 2 de collecte de données relatives à la distribution d'un produit 4, qui est un serveur de l'opérateur du réseau de communication 3, comprend un module de stockage de données 22 et un module de traitement de données 21.

Ce dernier est configuré pour mettre en aeuvre :
- un module de réception via le réseau de communication 3 d'au moins un message émis par le terminal mobile 1a, 1b, le message contenant un code comprenant un identifiant dudit produit 4 (ainsi que le cas échéant un identifiant unique) ;
- un module de détermination d'un ensemble de données descriptives du message comprenant au moins :
   o des données temporelles relatives au moment d'émission du message par le terminal mobile 1a, 1b ;
   o des données de localisation relatives au lieu d'émission du message par le terminal mobile 1a, 1b (données relatives aux stations de base BTSa, BTSb utilisées) ;
   o (ainsi que les données permettant d'identifier le terminal 1a, 1b, en particulier son numéro de téléphone)
- un module de suppression dans ledit ensemble de données descriptives des données permettant l'identification du terminal mobile 1a, 1b de sorte à les anonymiser ;
- un module d'association dans une base de données structurées stockée dans le module de stockage de données 22 de l'identifiant du produit 4 avec les données descriptives du message anonymisées.

Le serveur 2 peut être un serveur mis à disposition par l'opérateur du terminal mobile 1a, 1 b, ou peut être un serveur applicatif opéré par un acteur tiers. C'est particulièrement le dernier cas si une application est installée sur le terminal mobile 1a, 1b, l'application étant en communication avec le serveur applicatif. Ce serveur applicatif met en oeuvre le procédé précédemment décrit.

### Produit programme d'ordinateur

Selon un troisième et un quatrième aspects, l'invention concerne un produit programme d'ordinateur comprenant des instructions de code pour l'exécution (en particulier sur le module de traitement de données 21 du serveur 2) d'un procédé selon le premier aspect de l'invention de collecte de données relatives à la distribution d'un produit 4, ainsi que des moyens de stockage lisibles par un équipement informatique (par exemple un module de stockage de données 22 du serveur 2) sur lequel on trouve ce produit programme d'ordinateur.

## Revendications

1. Procédé de collecte de données relatives à la distribution d'un produit (4), comprenant la mise en oeuvre par un module de traitement de données (21) d'un serveur (2) d'étapes de :
(a) Réception via un réseau de communication (3) d'au moins un message émis par un terminal mobile (1a, 1b), le message contenant un code comprenant un identifiant dudit produit (4) ;
(b) Détermination d'un ensemble de données descriptives du message comprenant au moins :
o des données temporelles relatives au moment d'émission du message par le terminal mobile (1a, 1b) ;
o des données de localisation relatives au lieu d'émission du message par le terminal mobile (1a, 1b) ;
(c) Suppression dans ledit ensemble de données descriptives des données permettant l'identification du terminal mobile (1a, 1b) de sorte à les anonymiser ;
(d) Association dans une base de données structurées stockée dans un module de stockage de données (22) du serveur (2) de l'identifiant du produit (4) avec les données descriptives du message anonymisées.

2. Procédé selon la revendication 1, dans lequel lesdites données descriptives du message sont des métadonnées extraites du message.

3. Procédé selon l'une des revendications 1 et 2, dans lequel les données de localisation relatives au lieu d'émission du message par le terminal mobile (1a, 1b) sont un identifiant d'une station de base (BTSa, BTSb) via laquelle le terminal mobile (1a, 1b) est connecté au réseau de communication (3).

4. Procédé selon l'une des revendications 1 à 3, dans lequel la suppression des données permettant l'identification du terminal mobile (1a, 1b) à l'étape (c) consiste en leur remplacement par des données factices dans ladite base de données structurées.

5. Procédé selon l'une des revendications 1 à 4, dans lequel le code comprenant un identifiant dudit produit (4) et un identifiant unique est marqué sur le produit (4), ce code étant saisi ou scanné par un utilisateur du terminal mobile (1a, 1 b) de sorte à être inséré dans le message reçu à l'étape (a).

6. Procédé selon l'une des revendications 1 à 5, dans lequel ledit code contenu dans le message comprend également un identifiant unique, cet identifiant unique étant supprimé du code à l'étape (c) de sorte à également l'anonymiser.

7. Procédé selon la revendication 6, dans lequel l'identifiant unique est comparé avant sa suppression avec une liste d'identifiants uniques remarquables, le procédé comprenant alors si l'identifiant unique est trouvé dans ladite liste une étape (d') d'enregistrement dans une base de données structurées auxiliaire également stockée dans le module de stockage (22) du serveur (2) des données permettant l'identification du terminal mobile (1a, 1b).

8. Procédé selon l'une des revendications 1 à 7, dans lequel les données permettant l'identification du terminal mobile (1a, 1b) consistent en un numéro de téléphone du terminal mobile (1a, 1b).

9. Procédé selon l'une des revendications 1 à 8, comprenant en outre une étape (e) de traitement de l'identifiant du produit (4) et/ou des données de localisation relatives au lieu d'émission du message par le terminal mobile (1a, 1b) de sorte à enrichir les données structurées.

10. Serveur (2) de collecte de données relatives à la distribution d'un produit (4), comprenant un module de stockage de données (22) et un module de traitement de données (21) configuré pour mettre en aeuvre :
- un module de réception via un réseau de communication (3) d'au moins un message émis par un terminal mobile (1a, 1b), le message contenant un code comprenant un identifiant dudit produit (4) ;
- un module de détermination d'un ensemble de données descriptives du message comprenant au moins :
∘ des données temporelles relatives au moment d'émission du message par le terminal mobile (1a, 1b) ;
∘ des données de localisation relatives au lieu d'émission du message par le terminal mobile (1a, 1b) ;
- un module de suppression dans ledit ensemble de données descriptives des données permettant l'identification du terminal mobile (1a, 1b) de sorte à les anonymiser ;
- un module d'association dans une base de données structurées stockée dans le module de stockage de données (22) de l'identifiant du produit (4) avec les données descriptives du message anonymisées.

11. Produit programme d'ordinateur comprenant des instructions de code pour l'exécution d'un procédé selon l'une des revendications 1 à 9 de collecte de données relatives à la distribution d'un produit (4).

12. Moyen de stockage lisible par un équipement informatique sur lequel un produit programme d'ordinateur comprend des instructions de code pour l'exécution d'un procédé selon l'une des revendications 1 à 9 de collecte de données relatives à la distribution d'un produit (4).

13. Procédé selon l'une des revendications 1 à 9, le message émis par le terminal mobile (1a, 1b) étant émis par une application exécutée par le terminal mobile (1a, 1b).

14. Procédé selon la revendication précédente, le message étant constitué par l'application suite à la lecture d'un tag de type code-barres.
